# EUROPEAN PATENT APPLICATION

(11) **EP 2 189 756 A1**
(43) Date of publication of application: **26.05.2010**
(21) Application number: 09014370.2
(22) Date of filing: 17.11.2009
(51) Int. Cl.: G01C 21/32

(54) **Map data management using road ghosting characteristics**

(30) Priority: 25.11.2008 US 323427
(71) Applicant: Broadcom Corporation, Irvine, CA 92617 (US)
(72) Inventor: Karaoguz, Jeyhan, 90602 Irvine CA (US); Bennet, James D., 36301 Hroznetin (CZ)
(74) Representative: Jehle, Volker Armin

(57) **Abstract**

Aspects of a method and system for map data management using road ghosting characteristics are provided. A mobile device transmits a map request to a mapping service server for a map view. Upon the receipt of the map request from the mobile device, the mapping service server creates a ghost map based on road ghost characteristic information gathered from mobile devices associated with the mapping service server. The road ghost characteristic information is overlaid on geographical locations to identify ghost pathways and road supplemental information. The characteristics associated with the identified ghost pathways and road supplemental information is merged into metadata. The ghost map is generated by correlating the metadata with geographic locations of interests of said mobile device. The ghost map is delivered to the mobile and presented via the user interface to users of the mobile device, accordingly.

## Description

### CROSS-REFERENCE TO RELATED APPLICATIONS/INCORPORATION BY REFERENCE

NOT APPLICABLE.

### FIELD OF THE INVENTION

Certain embodiments of the invention relate to communication systems. More specifically, certain embodiments of the invention relate to a method and system for map data management using road ghosting characteristics.

### BACKGROUND OF THE INVENTION

Map databases are integral to many ITS (Intelligent Transportation Systems) applications in navigation, traffic forecasting, and route planning. For example, a car navigation system is utilized to assist users of mobile devices in finding their way from one location to another typically via algorithms operating on map databases. With the increasing deployment of ITS technology demands for accurate and complete map databases of the nation's road network are surging. Large scale geographical information and associated attributes are in high demand in order to generate new databases and to update existing databases. The acquisition of such information is mostly realized by aerial photogrammetry or terrestrial surveying using, for example, total stations.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for map data management using road ghosting characteristics, substantially as shown in and/or described in connection with at least one of the figures, as set forth more completely in the claims.
According to an aspect, a method for communication comprises:
transmitting a map request from a mobile device to a mapping service server serving a plurality of mobile devices; and
receiving a ghost map from said mapping service server, wherein said mapping service server creates said ghost map in response to said map request based on road ghost characteristic information received from said plurality of mobile devices.
Advantageously, said map request comprise said mobile device identification information and/or geographical locations of interests.
Advantageously, the method further comprises collecting said road ghost characteristic information for current and past geographical locations of said plurality of mobile devices.
Advantageously, the method further comprises recording said road ghost characteristic information along with associated geographical locations, date, time, and/or user context within said mobile device.
Advantageously, the method further comprises communicating said recorded ghost characteristic information from said mobile device to said mapping service server.
Advantageously, said mapping service server overlays said road ghost characteristic information from said plurality of mobile devices on a representation of said associated geographical locations.
Advantageously, said mapping service server identifies one or more ghost pathways and/or road supplemental information based on said overlaid road ghost characteristic information from said plurality of mobile devices.
Advantageously, said mapping service server merges characteristics associated with said one or more ghost pathways and/or road supplemental information into metadata.
Advantageously, said mapping service server selects a portion of said metadata based on characteristics of said map request.
Advantageously, said mapping service server generates said ghost map by correlating said selected metadata with geographic locations of interest for said mobile device.
Advantageously, the method further comprises presenting said ghost map via a user interface to users of said mobile device.
According to an aspect, a system for communication comprises:
one or more circuits for use in a mobile device, wherein said one or more circuits are operable to transmit a map request to a mapping service server serving a plurality of mobile devices; and
said one or more circuits are operable to receive a ghost map from said mapping service server, wherein said mapping service server creates said ghost map in response to said map request based on road ghost characteristic information received from said plurality of mobile devices.
Advantageously, said map request comprise said mobile device identification information and/or geographical locations of interests.
Advantageously, said one or more circuits are operable to collect road ghost characteristic information of geographical locations of said mobile device.
Advantageously, said one or more circuits are operable to record said road ghost characteristic information along with associated geographical locations, date, time, and/or user context within said mobile device.
Advantageously, said one or more circuits are operable to communicate said recorded road ghost characteristic information from said mobile device to said mapping servicer server.
Advantageously, said mapping service server overlays said road ghost characteristic information from said plurality of mobile devices to said associated geographical locations.
Advantageously, said mapping servicer server identifies one or more ghost pathways and/or road supplemental information based on said overlaid road ghost characteristic information from said plurality of mobile devices.
Advantageously, said mapping service server merges characteristics associated with said one or more ghost pathways and/or road supplemental information into metadata.
Advantageously, said mapping service server selects a portion of said metadata based on characteristics of said map request.
Advantageously, said mapping service server forms said ghost map by correlating said selected metadata with geographic locations of interest of said mobile device.
Advantageously, said one or more circuits are operable to present said ghost map to users via a user interface of said mobile device.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG.1 is a block diagram of an exemplary communication system for providing map data management using road ghosting characteristics, in accordance with an embodiment of the invention.

FIG. 2 is a block diagram illustrating an exemplary mapping service server for providing map data management using road ghosting characteristics, in accordance with an embodiment of the invention.

FIG.3 is a block diagram illustrating an exemplary mobile device that employs map data management using road ghosting characteristics, in accordance with an embodiment of the invention.

FIG.4 is a flow chart illustrating an exemplary ghost data collection procedure, in accordance with an embodiment of the invention.

FIG.5 is a block diagram illustrating an exemplary ghost pathway generator, in accordance with an embodiment of the invention.

FIG.6 is a flow chart illustrating an exemplary ghost map acquisition procedure, in accordance with an embodiment of the invention.

### DETAILED DESCRIPTION OF THE INVENTION

Certain embodiments of the invention may be found in a method and system for map data management using road ghosting characteristics. In accordance with various embodiments of the invention, a mobile device transmits a map request to a mapping service server to provide a map view or a map image. Upon the receipt of the map request from the mobile device, the mapping service server generates a ghost map based on road ghost characteristic information gathered from a plurality of mobile devices associated with the mapping service server. The created ghost map is transmitted via a supporting communication network and received by the mobile device. The map request comprises mobile device identification information and/or geographical locations of interests of the mobile device. The road ghost characteristic information associated with geographical locations of the mobile device is collected via the user interface of the mobile device. The collected road ghost characteristic information are recorded along with associated geographical locations, date, time, and/or user context, and store inside the mobile device. The mobile device communicates the recorded ghost characteristic information via the supporting communication network to the mapping service server.

The mapping service server is operable to overlay gathered ghost characteristic information on associated geographical locations to identify one or more ghost pathways and/or road supplemental information. The supplemental information comprises various details associated with the geographical locations. For example only and without limitation, a particular geographical location may be a gas station and may be located within an accident warning zone. The mapping service server is enabled to merge the characteristics associated with the identified one or more ghost pathways and/or road supplemental information into metadata. Exemplary characteristics associated with the identified one or more ghost pathways comprise various confidence levels of the identified one or more ghost pathways. The mapping service server is operable to select a portion of the metadata relating to the geographical locations of interests indicated in the received map request. The ghost map is generated at the mapping service server by correlating the selected portion of the metadata with geographic locations of interests of said mobile device. The formed ghost map is communicated with the mobile device via the supporting communication network. Upon the receipt of the ghost map, the mobile device displays or otherwise presents the ghost map in a specified format to users via a user interface of the mobile device.

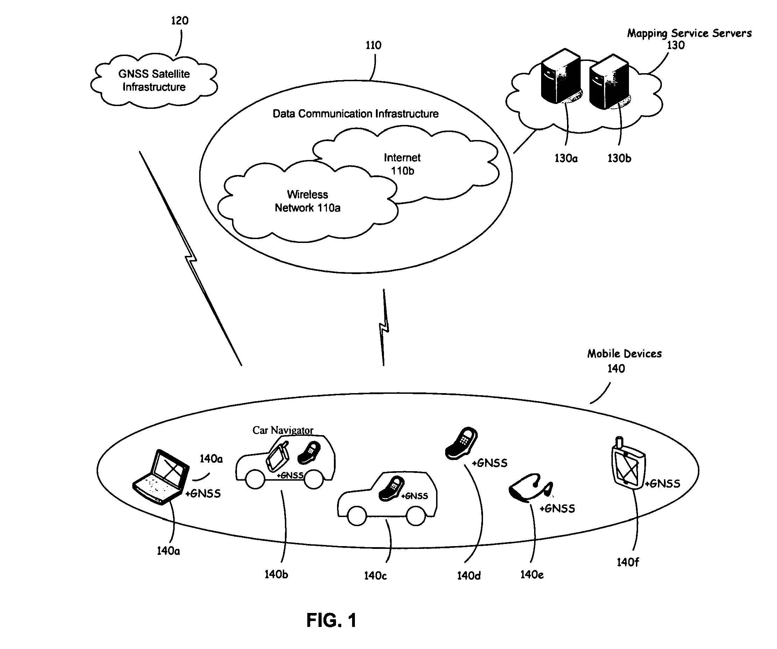

FIG. 1 is a block diagram of an exemplary communication system for providing map data management using road ghosting characteristics, in accordance with an embodiment of the invention. Referring to FIG. 1, there is shown the system of FIG. 1 comprises a data communication infrastructure 110, a Global Navigation Satellite Service (GNSS) satellite infrastructure 120, a plurality of mapping service servers 130, of which a mapping service server 110a and a mapping service server 110b are displayed, a plurality of mobile devices 140, of which a GNSS enabled notebook 140a, a car navigation system 140b, a GNSS enabled cell phone 140c in a moving car, a GNSS enabled cell phone 140d, a GNSS enabled stereo headset 140e, and a GNSS enabled smart phone 140f are displayed.

The data communication infrastructure 110 comprises suitable logic, circuitry and/or code that enable data communications among various communication devices. The data communication infrastructure 110 comprises a wireless network 110a and/or Internet 110b. The wireless network 110a comprise suitable logic, circuitry and/or code that is enabled to provide various wireless data services by using a particular technology such as GSM, UMTS, WiFi, WiMAX, or WLAN/LAN. The Internet 110b comprises suitable logic, devices and/or code that enable data communication using Internet Protocols (IP).

The GNSS satellite infrastructure 120 comprises suitable logic, circuitry and/or code that provide navigation information to various GNSS receivers. The GNSS receivers, which comprise GPS, GALILEO and/or GLONASS receivers, are integrated within or externally coupled to the mobile devices such as the GNSS enabled notebook 140a and the GNSS enabled cell phone 140d.

The mapping service servers 130 comprise suitable logic, circuitry and/or code that are enabled to create and/or update metadata relating to geographic locations of interest based on road ghosting characteristics such as road condition data and traffic data associated with the current geographic locations of the mobile devices 140. The road ghosting characteristics are really unverified road characteristics associated with geographic locations of interest. Exemplary feedback data comprise information indicating that a road is very slippery when wet, and that there ongoing construction. The feedback data could also show that traffic on a road seems to break down at a particular geographical location and nobody drives on the road beyond that particular geographical location. The mapping service servers 130 are operable to collect such road ghosting characteristics via various resources. In this regard, the mobile devices 140 are utilized to gather various road ghosting characteristic information and record per, for example, user context, geographical locations of interest, date, and time. The mapping service server 130 is enabled to gather the recorded road ghosting characteristics via the data communication infrastructure 110. The mapping service server 130 is capable of identifying some ghost roads based on the road ghosting characteristics. The characteristic information associated with the identified ghost roads is merged into metadata. The metadata is correlated with or overlaid on the geographic locations of interest and is provided to service participants such as the mobile devices 140 via the data communication infrastructure 110.

The mobile devices 140 comprise suitable logic, circuitry and/or code that enable various data communications via the wireless network 110b and/or the Internet 110a. The mobile devices 140 are operable to gain access to various mapping services by associating with the mapping service servers 130. The mobile devices 140 are enabled to collect various road ghosting characteristic information such as, for example, current road condition data and/or current traffic data associated with given geographic locations of the mobile devices 140. The collected road ghosting characteristics are recorded by the mobile devices 140 as ghost data along with user identifiers or context, geographic locations of interests, date, and time of the day. The mobile devices 140 are operable to store the recorded ghost data and share with other service participants associated with the mapping service servers 130 via the data communication infrastructure 110.

In operation, various road ghosting characteristic information are collected by the mobile devices 140 and recorded along with user identifiers and/or context, geographic locations of interests, date, and time of the day, as ghost data. The recorded ghost data is gathered by the mapping service server 130 via the wireless network 120b and/or the internet 120a. The mapping service server 130 is operable to identify current road information such as, for example, some ghost roads and problematic roads, by using the collected road ghost characteristic information. The collected road ghost characteristic information is utilized to create and/or update metadata which is overlaid on associated geographic locations of interest with the mobile devices 140.

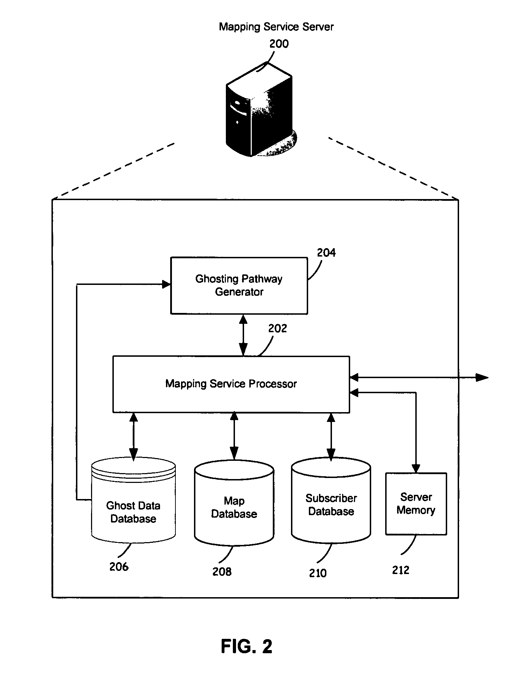

FIG. 2 is a block diagram illustrating an exemplary mapping service server for providing map data management using road ghosting characteristics, in accordance with an embodiment of the invention. Referring to FIG. 2, there is shown an exemplary mapping service server 200 comprising a mapping service processor 202, a ghosting pathway generator 204, a ghosting data database 206, a map database 208, a subscriber database 210, and a server memory 212.

The mapping service processor 202 comprises suitable logic, circuitry and/or code that enable control and/or handle data processing operations for the mapping service server 200. The mapping service processor 202 is enabled to gather road ghosting characteristics from service participants such as the mobile devices 140 to identify ghost pathways relating to geographical locations of interests via the ghosting pathway generator 204. The mapping service processor 202 merges identified ghost pathways to the geographic locations of interest of a map to share among the service participants. The mapping service processor 202 is operable to manage and control various aspects of communications with service participants.

The ghosting pathway generator 204 comprise suitable logic, circuitry and/or code that may overlay ghosting characteristics such as ghosting road condition data and ghosting traffic data to geographic locations of interest. The overlaid ghosting characteristics are merged into metadata to provide to the mapping service processor 202 for various mapping services. The ghosting pathway generator 204 is enabled to identify various ghosting pathways based on the overlaid ghosting characteristics. Depending on the characteristics of requested mapping services, the ghosting pathway generator 204 provides supplemental information such as, for example, the fastest pathway, the safest pathway, and accident warnings, within the areas of geographical locations of interests. The ghosting pathway generator 204 correlates the identified pathways and associated supplemental information to metadata and pass to the mapping service processor 202. The ghosting pathway generator 204 is programmed to provide ghosting pathway updates periodically and/or when various mapping service requests received.

The ghosting data database 206 comprise suitable logic, circuitry and/or code that comprise details of road ghost characteristic information, for example, traffic pattern changes during a given time period, extra lane added in a given road, and accidents and/or failure of vehicles repeatedly at a particular location.

The map database 208 comprise suitable logic, circuitry and/or code that enable storage of map data comprising, for example, coordinate data representative of maps of geographical areas, and some details of facility characteristics, for example, hotels, restaurants, shops or the like, associated with the geographical coordinates of each location. The map database 208 comprises RAM, ROM, low latency nonvolatile memory such as flash memory and/or other suitable electronic data storage capable of storing data and instructions.

The subscriber database 210 comprises suitable logic, circuitry and/or code that enable storage of subscriber information pertaining to the mapping service server 130. The subscriber information comprise, for example, the subscriber identifier, user context, subscriber service profiles, subscriber device configuration information, telephone numbers, and associated location area identifier or postcode. The location area identifier is indicated by various addresses such as, for example, IP address and/or GNSS address associated with the subscribers. The subscriber database 210 comprises RAM, ROM, low latency nonvolatile memory such as flash memory and/or other suitable electronic data storage capable of storing data and instructions.

The server memory 212 comprises suitable logic, circuitry, and/or code that enable storage of data and/or other information utilized by the mapping service processor 202. For example, the server memory 212 is utilized to store processed data generated by the mapping service processor 202. The server memory 212 is operable to store executable instructions to merge the metadata from the ghosting pathway generator 204 to geographic locations of interests selectively for a particular service request. Some software such as Internet reading software is stored in the memory 212 for communicating ghosting characteristics via the Internet 120a. The server memory 212 comprises RAM, ROM, low latency nonvolatile memory such as flash memory and/or other suitable electronic data storage capable of storing data and instructions.

In operation, road ghosting characteristic information such as, for example, road condition data and traffic data in terms of geographical locations of interests, date, time, and user context, are collected and recorded as ghost data by the mobile devices 140. The recorded ghost data is communicated with the mapping service server 200 via the data communication infrastructure 110. The mapping service processor 202 is operable to gather the ghost data from service participants and store it in the ghost data database 206. The ghosting pathway generator 204 is enabled to correlate road ghosting characteristics of the ghost data stored in the ghost data database 206 to geographic locations of interest. The characteristics associated with ghosting pathways and other supplemental information such as warnings of high car accident risk roads is provided by the ghosting pathway generator 204 and merged to metadata. The mapping service processor 202 is operable to correlate the metadata with the geographical locations of interests to provide various mapping services to service participants such as the mobile devices 140.

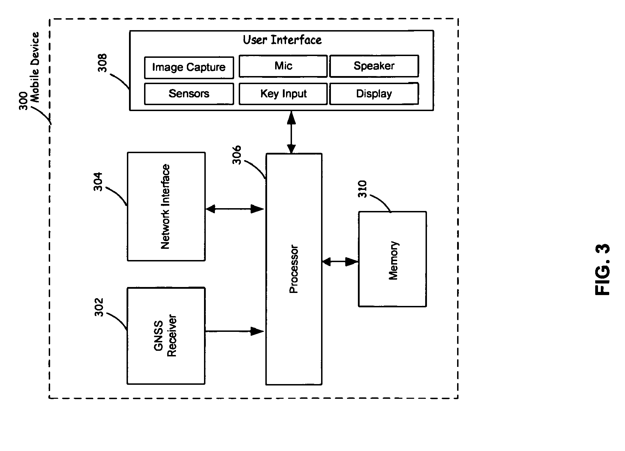

FIG. 3 is a block diagram illustrating an exemplary mobile device that employs map data management using road ghosting characteristics, in accordance with an embodiment of the invention. Referring to FIG. 3, there is shown a mobile device 300 comprising a GNSS receiver 302, a network interface 304, a processor 306, a memory 308, and a user interface 310 comprising components such as image capture, mic, speaker, sensors, key input, and/or display.

The GNSS receiver 302 comprise suitable logic, circuitry and/or code that is enabled to receive GNSS satellite broadcast signals and convert them to GNSS baseband signals. THE GNSS baseband signals are suitable for further processing by the processor 306 to determine positional information of the mobile device 300.

The network interface 304 comprises suitable logic, circuitry and/or code that are enabled to transmit and/or receive radio signals over a wired and/or wireless network. In this regard, the communicated radio signals comprise navigational information communicated with various mapping service servers 110.

The processor 306 comprise suitable logic, circuitry and/or code that are enabled to process received satellite signals as well as signals communicated with a supporting communication network. The processor 306 is operable to process road ghosting characteristics collected via the user interface 308 and record as ghost data along with geographical locations of interests, user context, date, and/or time of the day into the memory 310. The ghost data is shared with the mapping service servers 110 to support various mapping services. The processor 306 is enabled to request a mapping service to particular geographical locations of interests from the mapping service servers 110. For example, the processor 306 is configured to communicate current geographical location of the mobile device 300 with the mapping service server 110a to acquire complete map data of special interest such as a complete map comprising possible ghost pathways indicating problematic pathways of the surrounding areas of the mobile device 300.

The user interface 308 comprises suitable logic, circuitry and/or code that service the mobile device 300 via entering user inputs and/or presenting various services to users. The user interface 308 comprise a microphone, a speaker, a keypad, a screen, a image capture, a touch screen, a light, a voice recognition system, and/or any other type of interfaces that are employed in the mobile device 300.

The memory 310 comprises suitable logic, circuitry, and/or code that enable storage of data and/or other information utilized by the processor 306. For example, the memory 310 is utilized to store processed data generated by the processor 302. The memory 310 is also utilized to store information, such as mobile device configuration information, that is utilized to control various operations of the mobile device 300. Additionally, the memory 310 stores some executable instructions for running various applications on the mobile device 300. Various mapping services received from the mapping service servers 110 are stored in the memory 310.

In operation, the mobile device 300 is enabled to gain access to various mapping services such as a map view for particular geographical areas of interest from a mapping service server 110a. The information from the received mapping services may be store into the memory 310. The processor 306 is operable to coordinate the memory 310 and the user interface 308 to present the received mapping services to users via the user interface 308, accordingly. The mobile device 300 is enabled to collect various road ghosting characteristics via the user interface 308. The collected road ghosting characteristics are recorded as ghosting data along with the geographical locations of interests, user context, date, and time of the day. The processor 306 processes the collected recorded ghosting data and share with the mapping service servers 110 via the network interface 304. The mobile device 300 is operable to gain access to mapping services for desired geographical locations of interests from the mapping service servers 110. For example, the current location of the mobile device 300, which is provided by the GNSS receiver 302, is communicated to the mapping service servers 110 for generation of a map view indicating information such as the ghost roads and the safest road within the surrounding areas of the mobile device 300.

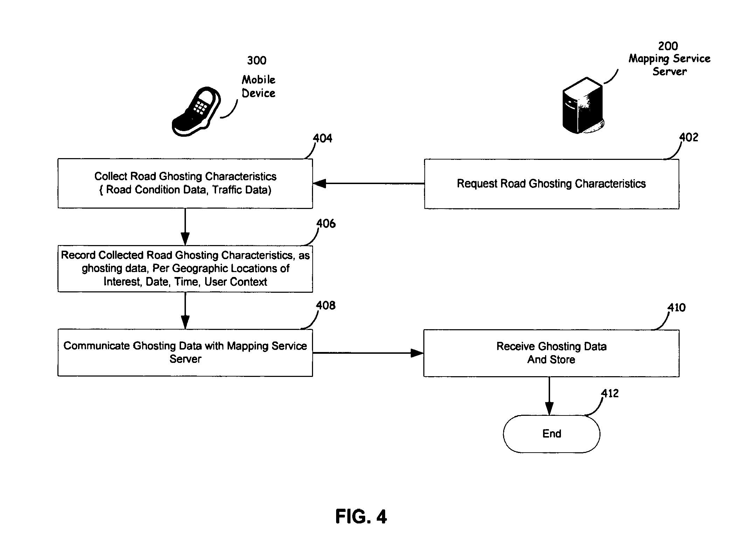

FIG.4 is a flow chart illustrating an exemplary ghost data collection procedure, in accordance with an embodiment of the invention. Referring to FIG.4, the exemplary steps start with the step 402, where the mapping service server 200 request the mobile device 300 to provide road ghosting characteristic information. In step 404, the mobile device 300 collect road ghosting characteristics such as road conditions data and traffic data associated with the current geographical locations of the mobile devices 140. In step 406, the collected road ghosting characteristics is recorded as ghost data along with geographic locations of interests, date, time of the day, and user context. In step 408, the ghost data is communicated with the mapping service server 200 via the data communication infrastructure 110. In step 410, the mapping service server 200 receives the ghosting data and store in the ghost data database 206. The exemplary steps end in step 412.

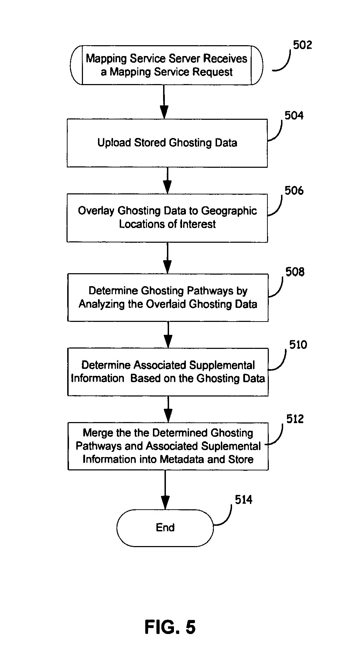

FIG.5 is a block diagram illustrating an exemplary ghost pathway generator, in accordance with an embodiment of the invention. Referring to FIG.5, the exemplary steps start with the step 502, where the mapping service server 200 receive mapping service request from the mobile device 300. In step 504, the ghosting pathway generator 204 is enabled to upload the ghost data from the ghost data database 206. In step 506, the ghost data is overlaid on geographical locations of interests relating to the received mapping service request. In step 508, the ghosting pathway generator 204 is operable to determine possible ghosting pathways by analyzing the ghost data. The determined ghost pathways are categorized such as one-way pathway and walk-way based on the characteristics of the ghost data. In step 510, the supplemental information is determined based on the ghost data. In step 512, the ghosting pathway generator 204 merges the characteristics associated with the determined ghosting pathways and associated supplemental Information into metadata and store in the map data database 208. The exemplary steps stop in step 514.

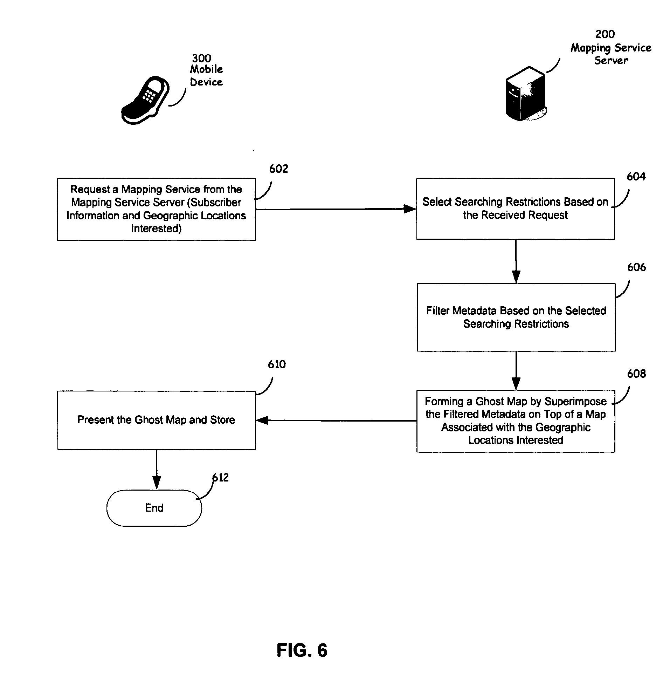

FIG.6 is a flow chart illustrating an exemplary ghost map acquisition procedure, in accordance with an embodiment of the invention. Referring to FIG. 6, the exemplary steps start with the step 602, where the mobile device 300 request a map service from the mapping service server 200. The mobile device 300 send associated geographical locations of interest and user information together with the service request. In step 604, the mapping service server 200 select searching restrictions based on characteristics of the received service request. In step 606, the mapping service processor 202 upload the latest metadata from the map data database 208 and filter the metadata based on the selected searching restrictions. In step 608, the mapping service processor 202 generate a ghost map by correlating the filtered metadata with the geographical locations indicated by the received service request and deliver to the mobile device 300 via the data communication infrastructure 110. In step 610, the mobile device 300 display or otherwise present the received ghost map via the user interface 308 and store in the memory 310. The exemplary steps stop in step 612.

Aspects of a method and system for map data management using road ghosting characteristics are provided. In accordance with various embodiments of the invention, a mobile device such as the GNSS enabled cell phone 140d in the system of FIG.1 transmit a map request for a mapping service to a mapping service server such as the mapping service server 130a. Upon receipt of the map request from the GNSS enabled cell phone 140d, the mapping service server 130a create ghost map based on road ghost characteristic information gathered from a plurality of mobile devices associated with the mapping service server 130a. The created ghost map is transmitted via the data communication infrastructure 110 and received by the GNSS enabled cell phone 140d via the network interface 304. The map request comprises mobile device identification information and/or geographical locations of interests of the user of the GNSS enabled cell phone 140d. The road ghost characteristic information associated with geographical locations of the GNSS enabled cell phone 140d is collected via the user interface 308. The collected road ghost characteristics is recorded along with associated geographical locations, date, time of the day, and/or user context, and stored in the memory 310.

The GNSS enabled cell phone 140d is operable to communicate the recorded ghost characteristic information via the data communication infrastructure 110 to the mapping service server 130a. The ghost pathway generator 204 of the mapping service server 130a is operable to overlay gathered ghost characteristic information on associated geographical locations to identify one or more ghost pathways and/or road supplemental information via the ghost pathway generator 204. The ghost pathway generator 204 merges the characteristics associated with the identified one or more ghost pathways and/or road supplemental information into metadata. The mapping service server 130a is operable to select a portion of the metadata relating to the geographical locations of interests indicated in the received map request. The ghost map is generated by the mapping service processor 202 by correlating the selected portion of the metadata with geographic locations of interests of said mobile device. The formed ghost map is communicated with the GNSS enabled cell phone 140d via the data communication infrastructure 110. Upon the receipt of the ghost map, the GNSS enabled cell phone 140d displays or otherwise present presents the ghost map to users via the user interface 308 of the with a preferred format. The presentation may occur in audio and/or visual format.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for map data management using road ghosting characteristics.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
transmitting a map request from a mobile device to a mapping service server serving a plurality of mobile devices; and
receiving a ghost map from said mapping service server, wherein said mapping service server creates said ghost map in response to said map request based on road ghost characteristic information received from said plurality of mobile devices.

2. The method according to claim 1, wherein said map request comprise said mobile device identification information and/or geographical locations of interests.

3. The method according to claim 1, comprising collecting said road ghost characteristic information for current and past geographical locations of said plurality of mobile devices.

4. The method according to claim 3, comprising recording said road ghost characteristic information along with associated geographical locations, date, time, and/or user context within said mobile device.

5. The method according to claim 4, comprising communicating said recorded ghost characteristic information from said mobile device to said mapping service server.

6. The method according to claim 4, wherein said mapping service server overlays said road ghost characteristic information from said plurality of mobile devices on a representation of said associated geographical locations.

7. A system for communication, the system comprising:
one or more circuits for use in a mobile device, wherein said one or more circuits are operable to transmit a map request to a mapping service server serving a plurality of mobile devices; and
said one or more circuits are operable to receive a ghost map from said mapping service server, wherein said mapping service server creates said ghost map in response to said map request based on road ghost characteristic information received from said plurality of mobile devices.

8. The system according to claim 7, wherein said map request comprise said mobile device identification information and/or geographical locations of interests.

9. The system according to claim 7, wherein said one or more circuits are operable to collect road ghost characteristic information of geographical locations of said mobile device.

10. The system according to claim 9, wherein said one or more circuits are operable to record said road ghost characteristic information along with associated geographical locations, date, time, and/or user context within said mobile device.
